# EUROPÄISCHE PATENTSCHRIFT

(11) **EP 2 218 349 B1**
(45) Veröffentlichungstag und Bekanntmachung des Hinweises auf die Patenterteilung: **22.06.2011**
(21) Anmeldenummer: 09152829.9
(22) Anmeldetag: 13.02.2009
(51) Int. Cl.: A43B 13/12, A43B 17/02, B29D 35/08

(54) **Schuheinlage mit Gel**
Shoe insert with gel
Semelle intérieure de chaussure dotée de gel

(43) Veröffentlichungstag der Anmeldung: 18.08.2010
(73) Patentinhaber: Spannrit Schuhkomponenten GmbH, 63801 Kleinostheim (DE)
(72) Erfinder: Katzer, Roland, 63801 Kleinostheim (DE)
(74) Vertreter: Leske, Thomas

(56) Entgegenhaltungen:
- WO-A1-00/24283
- US-A- 5 939 157
- US-A1- 2006 048 414
- US-A1- 2008 127 517

## Beschreibung

Die Erfindung betrifft ein Verfahren zum Herstellen einer Schuheinlage sowie eine Schuheinlage, welche zumindest in Teilbereichen Gel aufweist.

Schuheinlagen werden in Schuhen zwischen der Sohle und dem Fuß des Schuhträgers eingebracht. Schuheinlagen werden i.d.R. mit den Schuhen verkauft, lassen sich jedoch auch nachrüsten, um die Schuheinlage speziell an die Anforderungen des Trägers anzupassen, beispielsweise für Sporteinlagen oder um durch orthopädische Schuheinlagen Fehlstellungen des Fußes auszugleichen. In vielen Fällen werden solche Schuheinlagen aus einem dauerelastischen Weichschaum, insbesondere einem aufgeschäumten Polyurethan, hergestellt.

Eine solche Schuheinlegesohle ist aus DE 20 2006 003 317 U1 bekannt. Die Schuheinlegesohle weist eine zweilagige, textile Deckschicht mit einer schuhseitigen Sperrschicht auf, an welche ein Polyurethan (PU)-Schaumteil anschäumbar ist.

Aus DE 20 2007 018 343 U1 ist eine Schaumkunststoff-Schuheinlegesohle mit mehreren Bereichen unterschiedlicher Materialhärte bekannt. Kontinuierlich verlaufende Härteübergänge zwischen den Bereichen unterschiedlicher Härte werden durch Vermischen der Polyol-Isocyanat-Mischung in unterschiedlichen Mengenrelationen im noch nicht ausgehärteten Zustand erreicht.

Ferner sind aus dem Stand der Technik Einlegesohlen bekannt, welche zur Verbesserung der Dämpfungseigenschaften zumindest in Teilbereichen ein Gel aufweisen. Aus DE 200 11 334 U1 ist eine Einlegesohle aus einem Schaumstoffmaterial bekannt, welche im Fersenbereich eine Ausnehmung aufweist. In diese Ausnehmung ist ein fersenseitiges Gel-Kissen formschlüssig festlegbar.

Aus DE 20 2007 008 016 U1 ist eine Einlage für einen Schuh bekannt, welche auf der Oberseite eingesetzte Einsätze aufweist. Die Einsätze, welche beispielsweise aus einem Polyurethanbasierten Material namens "Technogel" bestehen, befinden sich in Aussparungen an der Oberseite der Einlage. Solche Aussparungen können beispielsweise durch Ausstanzen oder Abfräsen der oberen Schicht der Einlegesohle erzeugt werden. Eine Einlage für einen Schuh, bei welcher die Aussparung nachträglich durch Fräsen oder Stanzen hergestellt, wird erhöht die Anzahl der Bearbeitungsschritte und wirkt sich somit nachteilig in Bezug auf die Kosteneffektivität für die Herstellung der Einlage aus. Zur Reduzierung des Reibungswiderstands beim Einsteigen in den Schuh wird vorgeschlagen, die Einlagenschicht aus Silikon nur lokal auszubilden.

Ferner ist aus US 2006/048414 A1 ein Schuh bekannt, welcher Stöße auf den Fuß während des Gehens absorbiert. Hierzu weist der Schuh im vorderen Bereich eine Einlegesohle auf. Die Einlegesohle besteht im Kern aus einem Gel. Dieses Gel ist vorzugsweise von einer dehnbaren Folie umschlossen. Diese Folie ist von einem nicht-gewebten Textil umgeben, welches den Effekt des Gels nicht abschwächt und mit der Fußsohle in Kontakt steht.

Die aus dem Stand der Technik bekannten Schuheinlagen weisen Bereiche mit Gel auf, welche an der Oberseite der Schuheinlage angeordnet sind. Die an der Oberfläche angeordneten Gelelemente weisen dahingehend Nachteile auf, dass der Einstieg in den Schuh durch den hohen Reibungswiderstand des Gels erschwert wird. Ferner werden durch den erhöhten Reibungswiderstand die Socken des Schuhträgers stärker strapaziert, was die Lebensdauer der Socken verkürzt. Außerdem ergeben sich Nachteile in der Haptik und dem Tragekomfort, da eine solche Schuheinlage Bereiche mit verschiedenen Obermaterialien aufweist. Beklebt man eine Sohle mit unterschiedlichen Obermaterialien mit einer Deckschicht, was aus dem Stand der Technik bekannt ist, verbindet sich der Klebstoff mit den Geleinsätzen, wodurch die Geleinsätze den gelartigen Charakter an ihrer Oberfläche verlieren.

Aufgabe der Erfindung ist es, eine Schuheinlage und ein Verfahren zur Herstellung einer Schuheinlage bereitzustellen, wobei die Schuheinlage in einem kostengünstigen Verfahren herstellbar ist, zumindest in Teilbereichen ein Gel aufweist und von einem einheitlichen, textilen Obermaterial bedeckt ist.

Die Aufgabe wird durch ein Verfahren gemäß Ansprüchen 1 und 3 sowie eine Einlegesohle gemäß Ansprüchen 10 und 12 gelöst. Zweckmäßige Weiterbildungen sind den jeweiligen abhängigen Ansprüchen zu entnehmen.

Bei einem erfindungsgemäßen Verfahren zum Herstellen einer Schuheinlage werden ein erstes und ein zweites Textil in eine erste Spritzgussform gebracht. Das erste Textil stellt dabei das Obermaterial dar, mit welchem der Fuß des Schuhträgers in Verbindung steht. Ein solches Obermaterial soll beispielsweise dem Tragekomfort zuträglich sein und bestimmt maßgeblich die Optik der Einlegesohle. Ein solches Obermaterial ist beispielsweise ein Baumwolltextil, ein Mikrofasergewebe, ein Leder oder dergleichen. Das zweite Textil weist beidseitig eine Beschichtung auf. Die Beschichtung auf einer ersten Seite, welche dem ersten Textil zugewandt ist, ist ein Hotmelt-Klebstoff. Hotmelt-Klebstoffe sind auch unter dem Namen Schmelzklebstoff bekannt. Auf einer zweiten Seite weist das zweite Textil eine für PU-Schaum durchschlaghemmende Versiegelung auf, welche dauerhaft mit dem zweiten Textil verbunden ist.

Die erste Spritzgussform ist so gestaltet, dass sie Ausnehmungen aufweist, in welche ein verflüssigtes Thermoplastic-Rubber- (TPR)-Gel eingespritzt wird. Solche TPR-Verbindungen sind auch als thermoplastische Elastomere (TPE) bekannt.

Die Ausnehmungen in der ersten Spritzgussform sind so gestaltet, dass sie die Form der TPR-Gel-Einsätze in der Einlegesohle darstellen und dass das TPR-Gel für eine Einlegesohle in einem Einspritzvorgang über eine Düse eingebracht werden kann. Es besteht jedoch auch die Möglichkeit, mehrere, nicht miteinander verbundene TPR-Gel-Einsätze über mehrere Düsen einzuspritzen. Vorzugsweise ist die erste Spritzgussform jedoch so ausgeführt, dass pro Einspritzvorgang das TPR-Gel für zwei Schuheinlegesohlen über eine Düse zwischen die beiden Textilschichten eingebracht wird.

Durch die Ausgestaltung der Ausnehmung kann die Form der Geleinsätze bestimmt werden. So wird beispielsweise Gel nur in die Bereiche der Schuheinlage eingebracht, in denen die dämpfende Wirkung des TPR-Gels erwünscht ist. Darüber hinaus kann über die Dicke der TPR-Gelseinsätze Einfluss auf die Stärke der Dämpfung genommen werden.

Die Verbindung des TPR-Gels mit dem ersten Textil basiert maßgeblich darauf, dass das TPR-Gel im verflüssigten Zustand einzelne Fasern des ersten Textils umfließt und somit beim Abkühlen und Aushärten eine Verbindung zwischen dem TPR-Gel und dem ersten Textil entsteht. Die Verbindung des zweiten Textils mit dem TPR-Gel beruht neben der beschriebenen Verbindung zwischen dem ersten Textil und dem TPR-Gel auf einer Verbindung durch Kohäsion des Hotmelt-Klebstoffs. Durch das Einbringen des erwärmten und somit verflüssigten TPR-Gel in Teilbereiche zwischen den beiden Textilien wird der Hotmelt-Klebstoff bis über seine Schmelztemperatur erwärmt. Dieses Aufschmelzen des Hotmelt-Klebstoffs geschieht jedoch nur an den Stellen, welche sich in unmittelbarer Nähe des erwärmten TPR-Gels befinden. Durch das Aufschmelzen des Hotmelt-Klebstoffs aufgrund des erwärmten TPR-Gels verringert sich die Viskosität des Hotmelt-Klebstoffs, so dass er in das zweite Textil eindringen kann. Beim Abkühlen entsteht somit lokal eine Verbindung zwischen dem zweiten Textil und dem TPR-Gel.

Nach dem Aushärten des TPR-Gels und des Hotmelt-Klebstoffs wird der Hotmelt-Klebstoff derart erwärmt, dass sich die beiden Textilien auch an den Stellen flächig verbinden, an denen sich kein TPR-Gel zwischen den beiden Textilien befindet. Die Temperatur zum Erwärmen des Klebstoffs muss jedoch so gewählt werden, dass sich das TPR-Gel nicht verflüssigt. Dieses Erwärmen kann ebenfalls in der ersten Spritzgussform erfolgen. Es besteht jedoch auch die Möglichkeit, die Erwärmung außerhalb der ersten Spritzgussform vorzunehmen. So können beispielsweise die beiden Textilien mit einer aus dem Stand der Technik bekannten Bügelmaschine verbügelt werden. Durch das flächige Verbinden der beiden Textilien entsteht ein Verbund aus den beiden Textilien und dem dazwischen in Teilbereichen eingebrachten TPR-Gel. Ferner weist der Verbund zwischen dem zweiten Textil und dem ersten Textil bzw. dem TPR-Gel eine Schicht Hotmelt-Klebstoff auf. Die Schicht aus Hotmelt-Klebstoff weist jedoch keine eindeutige Trennfläche auf, da sie durch das Erwärmen in die benachbarten Textilmaterialien eindringt und so eine Verbindung der benachbarten Textilmaterialien auf Basis von Kohäsion herstellt. Die dem ersten Textil abgewandte Seite des zweiten Textils weist weiterhin die PU-Schaum durchschlaghemmende Versiegelung auf.

In einem nächsten Verfahrensschritt wird an die durchschlaghemmende Versiegelung des Verbundes eine PU-Schicht angespritzt. Bei einem solchen Anspritzvorgang werden Edukte für eine Polyadditionsreaktion zum Herstellen eines aufgeschäumten Polyurethans in eine Ausschäumform eingebracht. Die Edukte eines solchen Aufschäumvorgangs sind beispielsweise Polyol und Isocyanat. Die Edukte können dabei über ein oder mehrere Düsen in die Ausschäumform eingebracht werden. Ferner können weitere Additive zugegeben werden, um die Materialeigenschaften des aufgeschäumten Polyurethans zu beeinflussen.

Bei der Ausschäumform kann es sich weiterhin um die erste Spritzgussform handeln, bei welcher die Ausnehmung(en) verändert wurde(n). Es ist beispielsweise möglich, durch verschiebbare Elemente in der ersten Spritzgussform die Ausnehmungen so zu vergrößern, dass die PU-Schicht in dieser Form angespritzt werden kann. Es ist jedoch auch möglich, dass es sich bei der Ausschäumform um eine zweite Spritzgussform handelt. Hierzu muss der Verbund vor dem Anspritzvorgang in die zweite Spritzgussform eingebracht werden. Ein solches Verfahren weist dahingehend Vorteile auf, dass die beiden Formen einfacher zu gestalten und mechanisch weniger aufwändig sind. Es müssen jedoch entweder zwei Spritzgussmaschinen bzw. eine Spritzgussmaschine und eine PU-Schaumanlage bzw. zwei PU-Schaumanlagen mit jeweils unterschiedlichen Formen vorhanden sein, oder bei einer Spritzgussmaschine muss die Form ausgetauscht werden, um eine Schuheinlage herstellen zu können.

Ein Verfahren zum Herstellen einer Schuheinlage wird vorzugsweise so ausgeführt, dass die TPR-Gel-Einsätze für ein Paar Schuheinlagen, d.h. für eine Schuheinlage für den rechten und den linken Schuh in einem Einspritzvorgang zwischen die beiden Textilien eingebracht wird. Anschließend werden die beiden Textilien miteinander verbügelt, und in einer zweiten Spritzgussform wird derart eine PU-Schicht angespritzt, dass nach Abtrennen der über die PU-Schicht hinausragenden Textilien ein Paar Schuheinlagen entsteht.

Zur Herstellung einer erfindungsgemäßen Schuheinlage können verschiedene Arten von Hotmelt-Klebstoffen verwendet werden. Ein wichtiges Kriterium ist dabei der Schmelzpunkt des Klebstoffs. So darf der Schmelzpunkt des Klebstoffs nicht oberhalb des Schmelzpunktes des verwendeten TPR-Gels liegen, da sich sonst beim Verbinden der beiden Textilien durch den Hotmelt-Klebstoff die Form des TPR-Gels verändern würde. Des Weiteren hat die Verträglichkeit mit den verwendeten Textilien und dem TPR-Gel Einfluss auf die Auswahl des Hotmelt-Klebstoffs. So darf beispielsweise der Hotmelt-Klebstoff das TPR-Gel chemisch oder physikalisch nicht angreifen. Ferner darf der Hotmelt-Klebstoff das erste Textil nicht durchdringen und somit an der Oberseite der Schuheinlage sichtbar werden. Bevorzugt wird deshalb ein EVA-basierter Hotmelt-Klebstoff verwendet. EVA-basierte Hotmelt-Klebstoffe haben weiterhin den Vorteil, dass sie sich als Folienmaterial in einfacher Weise flächig auf das zweite Textil aufbringen lassen.

In einem weiteren Verfahren zur Herstellung einer erfindungsgemäßen Schuheinlage werden ein erstes und ein zweites Textil in eine erste Spritzgussform eingebracht. Im Unterschied zu dem oben beschriebenen Verfahren weist das zweite Textil bei diesem Verfahren keine Beschichtung mit Hotmelt-Klebstoff auf. Bei einem solchen Verfahren wird das verflüssigte TPR-Gel über die gesamte Fläche der Schuheinlage zwischen die beiden Textilien eingebracht. Beim Abkühlen des TPR-Gels verbindet sich dieses mit dem ersten und dem zweiten Textil, indem es oberflächlich in die Textilien eindringt und einzelne Fasern umschließt. Ein so entstehender Verbund aus den beiden Textilien mit einer dazwischen angeordneten Schicht aus TPR-Gel weist weiterhin eine durchschlaghemmende Versiegelung an der dem ersten Textil abgewandten Seite des zweiten Textils auf. An die durchschlaghemmende Versiegelung des Verbundes wird in einem weiteren Verfahrensschritt eine PU-Schicht angespritzt. Dieser Anspritzvorgang kann, wie oben schon beschrieben, in der ersten oder einer zweiten Spritzgussform erfolgen.

Die durchschlaghemmende Versiegelung des zweiten Textils verhindert, dass die PU-Schicht beim Anschäumen das zweite Textil durchdringt oder gar auf die Oberfläche des ersten Textils durchschlägt und dort sichtbar wird. Ferner muss das Polyurethan an eine Schicht angespritzt werden, mit welcher es eine dauerhafte Verbindung eingeht. So ist beispielsweise das Anspritzen an das TPR-Gel nicht möglich, da das Polyurethan mit dem TPR-Gel keine Verbindung eingeht. Bevorzugterweise wird als durchschlaghemmende Versiegelung eine TPU-Folie verwendet. Bei dem Werkstoff TPU handelt es sich um ein thermoplastisches Elastomer auf Urethanbasis, was eine Untergruppe der thermoplastischen Elastomere darstellt. Vorteile einer solchen TPU-Folie bestehen dahingehend, dass sich die Folie plastisch verformen lässt, wodurch sie sich beim Anspritzvorgang des Polyurethans in eine Form zwängen lässt. Weiterhin kann eine sehr dünne TPU-Folie verwendet werden, welche beispielsweise eine Dicke von 25 µm aufweist.

Als zweites Textil wird vorzugsweise ein Vlies verwendet. Ein Vlies bietet dahingehend Vorteile, dass es eine dauerhafte Verbindung mit der TPU-Folie eingeht. Weiterhin lässt es sich mit einer Schicht Hotmelt-Klebstoff bestücken, so dass es als zweiseitig beschichtetes Vlies dem Herstellprozess einer Schuheinlage zugeführt werden kann.

Weiter vorzugsweise weist die Ausnehmung der zweiten Spritzgussform die Kontur der fertigen Schuheinlage auf. Durch das einseitige Anspritzen des Polyurethans kann der bisher flexible Verbund aus Textilien mit entsprechenden Beschichtungen und TPR-Gel in eine gewünschte Form gebracht werden. Durch die entsprechende Gestaltung der Ausnehmung kann beispielsweise ein 3-D-Fußbett erzeugt werden. Weiterhin ist es durch die Gestaltung der Ausnehmung möglich, orthopädische Geometrieelemente wie Pelotten in das Fußbett zu integrieren. Weiterhin lässt sich durch entsprechende Gestaltung der Ausnehmung die Unterseite der Schuheinlage in eine entsprechende Form bringen, so dass eine weitere Nachbearbeitung, beispielsweise durch Schleifen oder Fräsen nicht mehr notwendig ist. Es versteht sich als selbstverständlich, dass auch eine einfache, kostengünstige Form als PU-Schicht anspritzbar ist.

Weiter vorzugsweise wird die Polyurethanschicht so angespritzt, dass sie unterschiedliche Härtebereiche aufweist. Unterschiedliche Härtegrade des aufgeschäumten Polyurethans lassen sich durch verschiedene Mischungsverhältnisse der Edukte des Polyurethans wie Polyurethanwerkstoffe, Aufschäummittel und gegebenenfalls Additive erzielt werden. So kann beispielsweise das Mischungsverhältnis von Edukten wie Polyol und Isocyanat in den Übergangsbereichen der Einlagenhärte kontinuierlich verändert werden. So wird erreicht, dass keine spürbare Trennung zwischen den Bereichen mit unterschiedlicher Härte entsteht. Es entsteht vielmehr ein fließender Übergang der verschiedenen Härtebereiche. Die Bereiche mit unterschiedlichen Mischungsverhältnissen können beispielsweise durch kontinuierliches Verändern des Mischungsverhältnisses während des Aufschäumens an einer Einspritzdüse erfolgen. Ferner können verschiedene Mischungsverhältnisse über mehrere Einspritzdüsen, welche an unterschiedlichen Stellen der Ausschäumform angeordnet sind, in die Ausnehmung eingebracht werden. Es erweist sich beispielsweise als vorteilhaft, im Fersenbereich ein Polyurethan mit höherer Härte zu erzeugen als im Ballenbereich.

Ferner besteht die Möglichkeit, vor dem Anspritzvorgang der PU-Schicht ein Fersenelement in die Ausschäumform einzubringen. So kann beispielsweise ein grobporiges, weiches Fersenelement aus PUR-Schaumstoff in die Form eingebracht werden. Durch Einbringen eines solchen Fersenelementes, lassen sich die Dämpfungseigenschaften der Schuheinlage weiter verbessern. Bei Einbringen eines solchen Fersenelements entsteht eine gewollte Trennkante zwischen weichem PUR-Schaumstoff und vergleichsweise hartem Polyurethan. Durch konstruktive Gestaltung der Randbereiche des Fersenelements lassen sich diese Übergänge jedoch auch reduzieren. Dies lässt sich beispielsweise dadurch beeinflussen, dass die Ränder des Fersenelements nicht rechtwinklig zur Grundfläche verlaufen.

Weiter vorzugsweise lässt sich vor dem Anspritzvorgang der PU-Schicht ein Kernelement in die Ausschäumform einbringen. Dies ist beispielsweise dann vorteilhaft, wenn besonders hohe Anforderungen an die Steifigkeit der Einlegesohle, beispielsweise als orthopädische Sohle oder als Sportsohle, gestellt werden. So kann durch Einbringen eines Kernelements, beispielsweise aus einem nicht aufgeschäumten Kunststoff, die Steifigkeit der Einlegesohle deutlich erhöht werden.

Eine efindungsgemäße Schuheinlage weist folgende Schichten auf: Als oberste Schicht, welche mit dem Fuß des Schuhträgers in Verbindung steht, dient ein so genanntes Obermaterial, welches als ein erstes Textil ausgebildet ist. An der Unterseite des Obermaterials ist zumindest bereichsweise ein TPR-Gel angeordnet, welches dort flächig mit dem Obermaterial dauerhaft verbunden ist. Ein zweites Textil ist über einen Hotmelt-Klebstoff mit dem TPR-Gel-bzw. an den Stellen, an denen sich kein TPR-Gel befindet, mit dem Obermaterial verbunden. Auf der gegenüberliegenden Seite des zweiten Textils befindet sich eine durchschlaghemmende Versiegelung. An diese durchschlaghemmende Versiegelung ist eine Polyurethanschicht angespritzt.

Bevorzugt wird die Schuheinlage gemäß einem Verfahren nach einem der Ansprüche 1 oder 2, oder einem der Ansprüche 4 bis 9 in ihrer Rückbeziehung auf Anspruch 1 oder 2 hergestellt.

Eine weitere, erfindungsgemäße Schuheinlage weist folgende Schichten auf: Ein TPR-Gel ist flächig zwischen einem ersten Textil, welches als Obermaterial der Schuheinlage dient, und einem zweiten Textil angeordnet und mit diesen verbunden. Die gegenüberliegende Seite des zweiten Textils, welche nicht mit dem TPR-Gel flächig verbunden ist, weist eine insbesondere für Polyurethan durchschlaghemmende Versiegelung auf. An die durchschlaghemmende Versiegelung ist eine Polyurethanschicht angespritzt.

Vorzugsweise ist eine solche Schuheinlage gemäß einem Verfahren nach einem der Ansprüche 3 sowie 4 bis 7 in ihrer Rückbeziehung auf Anspruch 3 hergestellt.

Weitere Merkmale und Vorteile der Erfindung ergeben sich aus den nachfolgenden Ausführungsbeispielen in Verbindung mit den Figuren. Dabei zeigt:
- Figur 1:: ein erstes und ein zweites Textil mit dazwischen befindlichem TPR-Gel,
- Figur 2:: eine Schnittdarstellung entlang der Ebene A-A aus Figur 1,
- Figur 3:: eine Detailansicht des Bereichs B aus Figur 2,
- Figur 4:: ein Draufsicht einer fertigen Schuheinlage, und
- Figur 5:: eine Schnittdarstellung entlang der Ebene C-C aus Figur 4.

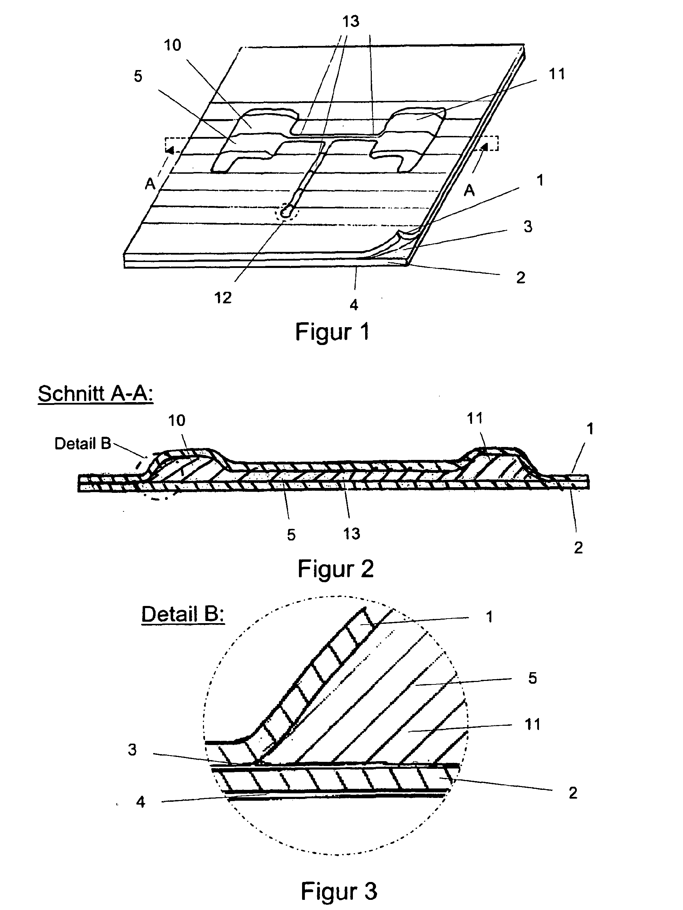

Figur 1 zeigt ein Zwischenprodukt des erfindungsgemäßen Verfahrens zum Herstellen einer Schuheinlage mit einem ersten Textil 1 und einem zweiten Textil 2. Das zweite Textil 2 weist beidseitig eine Beschichtung auf. Auf der Oberseite, welche an der rechten vorderen Ecke sichtbar ist, weist das zweite Textil eine Beschichtung mit Hotmelt-Klebstoff 3 auf. Auf der unteren, nicht sichtbaren Seite weist das zweite Textil 2 eine für Polyurethan durchschlaghemmende Versiegelung 4 auf. Bei der durchschlaghemmenden Versiegelung 4 handelt es sich um eine TPU-Folie. In einem ersten Bereich 10 und einem zweiten Bereich 11 ist TPR-Gel 5 zwischen das erste Textil 1 und das zweite Textil 2 eingebracht. In dem dargestellten Ausführungsbeispiel wird das TPR-Gel 5 mittels einer Einspritzdüse in der ersten Spritzgussform über einen Einspritzpunkt 12, welcher ein Loch im zweiten Textil darstellt, zwischen das erste Textil 1 und das zweite Textil 2 eingebracht. In der ersten Spritzgussform ist die Ausnehmung mit Einspritzkanälen derart ausgestaltet, dass das TPR-Gel 5 über Einspritzkanäle in den ersten und zweiten Bereich 10, 11 eingespritzt werden kann. Das in den Einspritzkanälen verbleibende TPR-Gel 5 ist als Angusskanal 13 dargestellt. Der erste und der zweite Bereich 10, 11 mit TPR-Gel 5 sind vorzugsweise jeweils ein Geleinsatz für eine fertige Einlegesohle 6, so dass in Figur 1 die Geleinsätze für ein Paar Schuheinlagen dargestellt sind. Gemäß einem nicht dargestelltem Ausführungsbeispiel besteht jedoch auch die Möglichkeit, nur einen ersten Bereich 10 mit TPR-Gel 5 über einen Einspritzpunkt 12 zwischen das erste Textil 1 und das zweite Textil 2 einzuspritzen. Weiterhin besteht die Möglichkeit, dass sich der Geleinsatz für eine Einlegesohle 6 aus mehreren Bereichen, beispielsweise einem ersten Bereich 10 und einem zweiten Bereich 11 mit TPR-Gel 5 zusammensetzt.

In dem in Figur 1 dargestellten Zwischenprodukt sind das erste Textil 1 und das zweite Textil 2 flächig mit dem TPR-Gel 5 verbunden, beispielsweise in dem ersten und zweiten Bereich 10, 11 oder als Angusskanal 13. Durch Erwärmen des Hotmelt-Klebstoffs auf eine Temperatur oberhalb seiner Schmelztemperatur und anschließendes Wiederabkühlen werden die beiden Textilien auch an den Stellen flächig miteinander verbunden, an denen sich kein TPR-Gel dazwischen befindet. Ein solches Erwärmen kann beispielsweise durch einen Bügelvorgang stattfinden.

Figur 2 zeigt eine Schnittdarstellung entlang der Ebene A-A aus Figur 1. Zwischen dem ersten Textil 1 und dem mit Hotmelt-Klebstoff 3 und der durchschlaghemmenden Versiegelung 10 beschichteten zweiten Textil 2 ist das TPR-Gel 5 angeordnet. Es sind ein erster Bereich 10, ein zweiter Bereich 11 und einen Angusskanal 13 dargestellt, welche aus TPR-Gel 5 bestehen. Die Form der Außenkontur des TPR-Gels 5 kann dabei über die Form der Ausnehmung in der ersten Spritzgussform beeinflusst werden. Über diese Ausnehmung lässt sich ebenfalls die Ausdehnungsrichtung des TPR-Gels 5 bestimmen. In dem beschriebenen Ausführungsbeispiel beispielsweise ist die Ausdehnungsrichtung des TPR-Gels 5 in Richtung des ersten Textils 1. Es besteht jedoch auch die Möglichkeit, dass sich die Ausdehnungsrichtung zu beiden Seiten hin erstreckt oder auch, dass sich das TPR-Gel 5 ausschließlich in Richtung des zweiten Textils 2 erstreckt.

Figur 3 zeigt das Detail B aus Figur 2. In dieser Detailansicht ist der Aufbau der einzelnen Schichten nach dem Einspritzvorgang des TPR-Gels 5 dargestellt. Das erste Textil 1 bildet dabei das Obermaterial der fertigen Schuheinlage 6. Das TPR-Gel 5 ist dauerhaft mit dem ersten Textil 1 verbunden. Durch das Einspritzen des erwärmten TPR-Gels und des damit verbundenen Aufschmelzens des Hotmelt-Klebstoffs 3 dringt der Hotmelt-Klebstoff 3 in das zweite Textil 2 ein. Beim anschließenden Abkühlen verbindet er dauerhaft das TPR-Gel mit dem zweiten Textil 2. Ferner weist das zweite Textil 2 an seiner Unterseite eine weitere Beschichtung auf. Diese Beschichtung besteht aus einer PU-durchschlaghemmenden Versiegelung 4, beispielsweise einer TPU-Folie, welche dauerhaft mit dem zweiten Textil 2 verbunden ist.

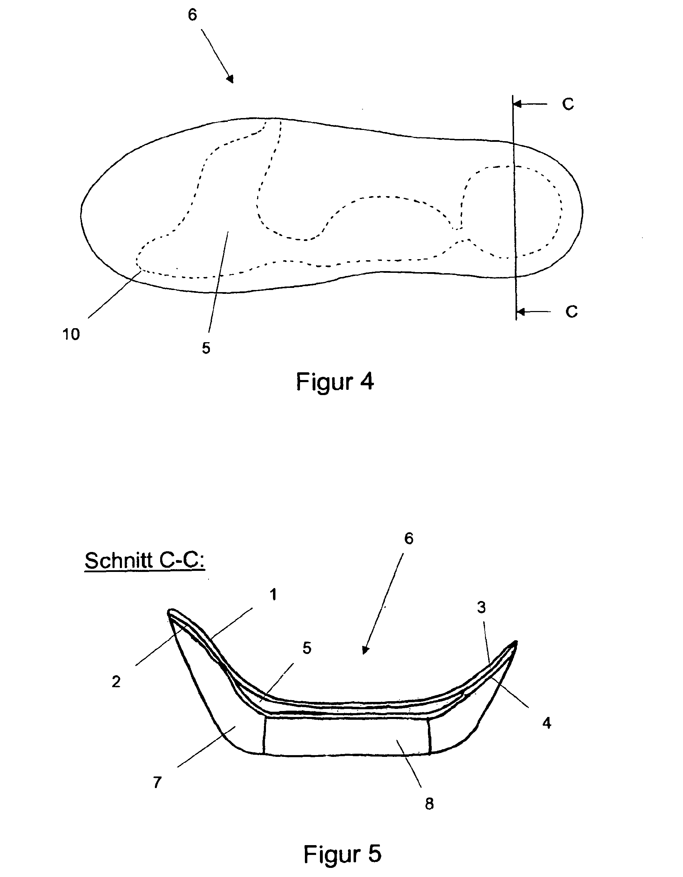

Figur 4 zeigt eine erfindungsgemäße Schuheinlage 6. In der Draufsicht ist schemenhaft ein erster Bereich 10 dargestellt, in welchem sich unter dem ersten Textil 1 TPR-Gel 5 befindet. Die Kontur des ersten Bereichs 10 ist beliebig wählbar und lässt sich den Anforderungen an eine Schuheinlage 6 anpassen. Der erste Bereich 10 kann sich beispielsweise auch über die gesamte Schuheinlage 6 erstrecken. Ferner ist es auch möglich, dass sich ein erster Bereich 10 und ein zweiter, vom ersten Bereich 10 abgetrennter Bereich 11 mit TPR-Gel 5 unter dem ersten Textil 1 befindet.

Figur 5 zeigt eine Schnittdarstellung entlang der Ebene C-C aus Figur 4. In der Schnittdarstellung einer fertigen Schuheinlage im Fersenbereich sind das erste Textil 1 und das zweite Textil 2 dargestellt. Zwischen dem ersten und dem zweiten Textil 1, 2 ist ein erster Bereich 10 mit TPR-Gel 5 angeordnet. Das TPR-Gel 5 ist dabei flächig mit dem ersten und dem zweiten Textil 1, 2 verbunden. An den Stellen, an denen sich kein TPR-Gel 5 zwischen den beiden Textilen 1, 2 befindet, sind die beiden Textilien flächig über den Hotmelt-Klebstoff 3 miteinander verbunden. Dieser Verbund aus dem ersten Textil 1, dem zweiten Textil 2 und dem ersten Bereich 10 mit TPR-Gel 5 weist an seiner Unterseite eine durchschlaghemmende Versiegelung 4 auf. Dieser durchschlaghemmenden Versiegelung 4 ist eine Schicht Polyurethan 7 angespritzt. Die Polyurethanschicht ist beispielsweise als dauerelastischer Weichschaum aufgeschäumt und definiert die Form der Schuheinlage 6. Durch entsprechende Gestaltung der Ausschäumform für die PU-Schicht 7 wird die wesentliche Form der Schuheinlage 6 definiert. Weiterhin können über die Mischungsverhältnisse der Edukte wie beispielsweise Polyol und Isocyanat und gegebenenfalls Additive die Eigenschaften der PU-Schicht 7 mitbestimmt werden. Weiterhin können über unterschiedliche Mischungsverhältnisse der Edukte Bereiche mit unterschiedlichen Härtegraden in der Sohle erzeugt werden. Dies kann beispielsweise in einem Aufschäumvorgang durch kontinuierliches Verändern der Mischungsverhältnisse geschehen. Ferner ist in die PU-Schicht ein Fersenelement 8 eingebracht. Ein solches Fersenelement 8, welches auch als Fersenabsorber bezeichnet werden kann, besteht beispielsweise aus einem grobporigen und weichen PU-Schaum. Ein solches Fersenelement 8 wird vor dem Anspritzvorgang der PU-Schicht in die Ausschäumform eingebracht.

### Bezugszeichenliste

- 1: erstes Textil
- 2: zweites Textil
- 3: Hotmelt-Klebstoff
- 4: Durchschlaghemmende Versiegelung
- 5: TPR-Gel
- 6: Schuheinlage
- 7: PU-Schicht
- 8: Fersenelement
- 10: erster Bereich
- 11: zweiter Bereich
- 12: Einspritzpunkt
- 13: Angusskanal

## Patentansprüche

1. Verfahren zum Herstellen einer Schuheinlage (6) mit folgenden Schritten:
■ Einbringen eines ersten und eines zweiten Textils (1, 2) in eine erste Spritzgussform, wobei das zweite Textil (2) auf seiner ersten Seite, welche dem ersten Textil (1) zugewandt ist, eine Schicht Hotmelt-Klebstoff (3) und auf seiner zweiten Seite eine durchschlaghemmende Versiegelung (4) aufweist;
■ Einbringen eines verflüssigten TPR-Gels (5) in Teilbereiche zwischen den beiden Textilien (1, 2), wobei der Hotmelt-Klebstoff (3) durch das TPR-Gel (5) lokal erwärmt wird und beim Abkühlen das sich zwischen den beiden Textilien (1, 2) befindende TPR-Gel (5) mit dem ersten Textil (1) und über den Hotmelt-Klebstoff (3) mit dem zweiten Textil (2) verbindet;
■ Erwärmen des Hotmelt-Klebstoffs (3) derart, dass sich die beiden Textilien (1, 2) außerhalb der Teilbereiche flächig verbinden und einen Verbund aus den beiden Textilien (1, 2) und dem in den Teilbereichen angeordneten TPR-Gel (5) bilden; und
■ Anspritzen einer PU-Schicht (7) an diesen Verbund auf der Seite mit der durchschlaghemmenden Versiegelung (4) in der ersten oder einer zweiten Spritzgussform.

2. Verfahren nach Anspruch 1, **dadurch gekennzeichnet, dass** der Hotmelt-Klebstoff (3) ein EVA-basierter Hotmelt-Klebstoff ist.

3. Verfahren zum Herstellen einer Schuheinlage (6) mit folgenden Schritten:
■ Einbringen eines ersten und eines zweiten Textils (1, 2) in eine erste Spritzgussform, wobei das zweite Textil (2) auf der dem ersten Textil (1) abgewandten Seite eine durchschlaghemmende Versiegelung (4) aufweist;
■ Einbringen eines verflüssigten TPR-Gels (5) derart flächig zwischen die beiden Textilien (1, 2), dass sich beim Abkühlen das TPR-Gel (5) mit dem ersten und zweiten Textil (1, 2) zu einem Verbund aus den beiden Textilien (1, 2) und dem dazwischen angeordneten Gel (5) verbindet; und
■ Anspritzen einer PU-Schicht (7) an diesen Verbund auf der Seite mit der durchschlaghemmenden Versiegelung (4) in der ersten oder einer zweiten Spritzgussform.

4. Verfahren nach einem der vorherigen Ansprüche, **dadurch gekennzeichnet, dass** die durchschlaghemmende Versiegelung (4) des zweiten Textils (2) eine TPU-Folie ist.

5. Verfahren nach einem der vorherigen Ansprüche, **dadurch gekennzeichnet, dass** das zweites Textil (2) ein Vlies ist.

6. Verfahren nach einem der vorherigen Ansprüche, **dadurch gekennzeichnet, dass** die PU-Schicht (7) in der zweiten Spritzgussform mit einer Kontur der Schuheinlage angespritzt wird.

7. Verfahren nach einem der vorherigen Ansprüche, **dadurch gekennzeichnet, dass** die PU-Schicht (7) mit unterschiedlichen Mischungsverhältnissen von Polyurethanwerkstoff und Aufschäummittel in einem einzigen, unterschiedliche Härtebereiche erzielenden Aufschäumvorgang angespritzt wird.

8. Verfahren nach einem der vorherigen Ansprüche, **dadurch gekennzeichnet, dass** vor dem Anspritzen der PU-Schicht (7) ein Fersenelement in die erste oder die zweite Spritzgussform eingebracht wird.

9. Verfahren nach einem der vorherigen Ansprüche, **dadurch gekennzeichnet, dass** vor dem Anspritzen der PU-Schicht (7) ein Kernelement in die erste oder die zweite Spritzgussform eingebracht wird.

10. Schuheinlage (6), **dadurch gekennzeichnet, dass** die Schuheinlage (6) einen Verbund aufweist aus folgende Schichten:
■ einem ersten Textil (1), welches ein Obermaterial der Schuheinlage mit einer Oberseite und einer Unterseite darstellt;
■ einem TPR-Gel (5), welches zumindest in Teilbereichen auf der Unterseite des ersten Textils (1) angeordnet und dort flächig mit diesem verbunden ist;
■ einem Hotmelt-Klebstoff (3), welcher das TPR-Gel (5) und die Stellen der Unterseite des ersten Textils (1), an welchen sich kein TPR-Gel (5) befindet, mit
■ einem zweiten Textil (2) an dessen erster Seite verbindet;
■ einer durchschlaghemmenden Versiegelung (4), welche mit einer zweiten Seite des zweiten Textils (2) verbunden ist; und
■ einer PU-Schicht (7), welche an die durchschlaghemmende Versiegelung (4) angespritzt ist.

11. Schuheinlage (6) nach Anspruch 10, **dadurch gekennzeichnet, dass** die Schuheinlage (6) gemäß einem Verfahren nach einem der Ansprüche 1, 2 sowie 4 bis 9 in ihrer Rückbeziehung auf Anspruch 1 oder 2 hergestellt ist.

12. Schuheinlage (6), **dadurch gekennzeichnet, dass** die Schuheinlage (6) einen Verbund aufweist aus folgende Schichten:
■ einem ersten Textil (1), welches ein Obermaterial der Schuheinlage mit einer Oberseite und einer Unterseite darstellt;
■ einem TPR-Gel (5), welches flächig mit dem ersten Textil (1) an dessen Unterseite und
■ einem zweiten Textil (2) an dessen erster Seite verbunden ist;
■ einer durchschlaghemmenden Versiegelung (4), welche mit einer zweiten Seite des zweiten Textils (2) verbunden ist; und
■ einer PU-Schicht (7), welche an die durchschlaghemmende Versiegelung (4) angespritzt ist.

13. Schuheinlage (6) nach Anspruch 12, **dadurch gekennzeichnet, dass** die Schuheinlage (6) gemäß einem Verfahren nach einem der Ansprüche 3 sowie 4 bis 9 in ihrer Rückbeziehung auf Anspruch 3 hergestellt ist.

## Claims

1. Process for producing a shoe insert (6) comprising the steps of:
• introducing a first and second textile (1, 2) into a first injection-moulding mould, wherein the second textile (2) has a layer of hotmelt adhesive (3) on its first side, which faces the first textile (1), and a strikethrough-inhibiting seal (4) on its second side;
• introducing a liquefied TPR gel (5) into sub-regions between the two textiles (1, 2), wherein the hotmelt adhesive (3) is locally heated by the TPR gel (5) and, on cooling, the TPR gel (5) positioned between the two textiles (1, 2) binds to the first textile (1) and, via the hotmelt adhesive (3), to the second textile (2);
• heating the hotmelt adhesive (3) such that the two textiles (1, 2) face-bind together outside the sub-regions to form a bound ensemble from the two textiles (1, 2) and the TPR gel (5) disposed in the sub-regions; and
• injecting a PU layer (7) onto this bound ensemble on the side with the strikethrough-inhibiting seal (4) in the first or a second injection-moulding mould.

2. Process according to Claim 1, **characterized in that** the hotmelt adhesive (3) is an EVA-based hotmelt adhesive.

3. Process for producing a shoe insert (6) comprising the steps of:
• introducing a first and second textile (1, 2) into a first injection-moulding mould, wherein the second textile (2) has a strikethrough-inhibiting seal (4) on that side which faces away from the first textile (1);
• introducing a liquefied TPR gel (5) sheetlike between the two textiles (1, 2), such that, on cooling, the TPR gel (5) binds to the first and second textiles (1,2) to form a bound ensemble composed of the two textiles (1,2) and the gel(5) disposed therebetween; and
• injecting a PU layer (7) onto this bound ensemble on the side with the strikethrough-inhibiting seal (4) in the first or a second injection-moulding mould.

4. Process according to any preceding claim, **characterized in that** the strikethrough-inhibiting seal (4) of the second textile (2) is a TPU foil.

5. Process according to any preceding claim, **characterized in that** the second textile (2) is a fibrous nonwoven web.

6. Process according to any preceding claim, **characterized in that** the PU layer (7) is injected in the second injection-moulding mould with a contour of the shoe insert.

7. Process according to any preceding claim, **characterized in that** the PU layer (7) is injected with different blend ratios of polyurethane material and foaming agent in a single foaming operation producing different hardness ranges.

8. Process according to any preceding claim, **characterized in that** a heel element is introduced into the first or second injection-moulding mould prior to injection of the PU layer (7).

9. Process according to any preceding claim, **characterized in that** a core element is introduced into the first or second injection-moulding mould prior to injection of the PU layer (7).

10. Shoe insert (6), **characterized in that** the shoe insert (6) includes a bound ensemble of the following layers:
• a first textile (1) which constitutes an upper material of the shoe insert with an upper side and a lower side;
• a TPR gel (5) disposed at least in sub-regions on the lower side of the first textile (1) and is face-bound thereto there;
• a hotmelt adhesive (3) binding the TPR gel (5) and the places of the lower side of the first textile (1) where there is no TPR gel (5) to
• a second textile (2) at the first side thereof;
• a strikethrough-inhibiting seal (4) bound to a second side of the second textile (2);
and
• a PU layer (7) injection moulded onto the strikethrough-inhibiting seal (4).

11. Shoe insert (6) according to Claim 10, **characterized in that** the shoe insert (6) is obtained by a process according to any one of Claims 1, 2 and also 4 to 9 in their back-reference to Claim 1 or 2.

12. Shoe insert (6), **characterized in that** the shoe insert (6) includes a bound ensemble of the following layers:
• a first textile (1) which constitutes an upper material of the shoe insert with an upper side and a lower side;
• a TPR gel (5) which is face-bound to the first textile (1) at the lower side thereof and to
• a second textile (2) at the first side thereof;
• a strikethrough-inhibiting seal (4) bound to a second side of the second textile (2); and
• a PU layer (7) injection moulded onto the strikethrough-inhibiting seal (4).

13. Shoe insert (6) according to Claim 12, **characterized in that** the shoe insert (6) is obtained by a process according to any one of Claims 3 and also 4 to 9 in their back-reference to Claim 3.

## Revendications

1. Procédé de fabrication d'une semelle intérieure (6) de chaussure, le procédé présentant les étapes suivantes :
- placer un premier et un deuxième textile (1, 2) dans un premier moule de moulage par injection, le deuxième textile (2) présentant une couche d'adhésif fusible à chaud (3) sur son premier côté tourné vers le premier textile (1) et un recouvrement anti-perforation (4) sur son deuxième côté,
- placer un gel TPR liquide (5) dans certaines parties situées entre les deux textiles (1, 2), l'adhésif fusible à chaud (3) étant chauffé localement par le gel TPR (5), le gel TPR (5) situé entre les deux textiles (1, 2) se reliant au premier textile (1) et par l'intermédiaire de l'adhésif fusible à chaud (3) au deuxième textile (2) lors du refroidissement,
- chauffer l'adhésif fusible à chaud (3) de telle sorte que les deux textiles (1, 2) soient reliés par leur surface en dehors de ces parties et forment un assemblage constitué des deux textiles (1, 2) et du gel TPR (5) disposé dans les parties et
- injecter dans le premier ou dans un deuxième moule de moulage par injection une mousse de PU (7) sur le côté doté du recouvrement anti-perforation (4) de cet assemblage.

2. Procédé selon la revendication 1, **caractérisé en ce que** l'adhésif fusible à chaud (3) est un adhésif fusible à chaud à base d'EVA.

3. Procédé de fabrication d'une semelle intérieure (6) de chaussure, le procédé comportant les étapes suivantes :
- placer un premier et un deuxième textile (1, 2) dans un premier moule de moulage par injection, le deuxième textile (2) présentant sur son premier côté tourné vers le premier textile (1) une couche de fermeture anti-perforation (4),
- placer en surface un gel TPR liquide (5) entre les deux textiles (1, 2) de telle sorte que lors du refroidissement, le gel TPR (5) se relie au premier et au deuxième textile (1, 2) pour former un assemblage des deux textiles (1, 2) et du gel (5) situé entre eux et
- injecter une mousse de PU (7) sur le côté doté du recouvrement anti-perforation (4) de cet assemblage dans le premier ou dans un deuxième moule de moulage par injection.

4. Procédé selon l'une des revendications précédentes, **caractérisé en ce que** le recouvrement anti-perforation (4) du deuxième textile (2) est une feuille de TPU.

5. Procédé selon l'une des revendications précédentes, **caractérisé en ce que** le deuxième textile (2) est un feutre.

6. Procédé selon l'une des revendications précédentes, **caractérisé en ce que** la couche de PU (7) est injectée dans le deuxième moule de moulage par injection qui présente le contour de la semelle intérieure de chaussure.

7. Procédé selon l'une des revendications précédentes, **caractérisé en ce que** la couche de PU (7) est injectée dans différents rapports de mélange du matériau de polyuréthane et de l'agent de moussage en une seule opération de moussage permettant d'obtenir des zones de dureté différente.

8. Procédé selon l'une des revendications précédentes, **caractérisé en ce qu'**avant l'injection de la mousse de PU (7), un élément de talon est inséré dans le premier ou le deuxième moule de moulage par injection.

9. Procédé selon l'une des revendications précédentes, **caractérisé en ce qu'**avant l'injection de la mousse de PU (7), un élément d'âme est placé dans le premier ou le deuxième moule de moulage par injection.

10. Semelle intérieure (6) de chaussure, **caractérisée en ce que** la semelle intérieure (6) de chaussure présente un assemblage constitué des couches suivantes :
- un premier textile (1) qui constitue un matériau supérieur de la semelle intérieure de chaussure et qui est doté d'un côté supérieur et d'un côté inférieur,
- un gel TPR (5) qui est disposé au moins dans certaines parties du côté inférieur du premier textile (1) et qui y est relié en surface,
- un adhésif fusible à chaud (3) qui relie le gel TPR (5) et les emplacements du côté inférieur du premier textile (1) sur lesquels le gel TPR (5) est absent au premier côté d'un deuxième textile (2),
- un recouvrement anti-perforation (4) relié à un deuxième côté du deuxième textile (2) et
- une couche de PU (7) injectée sur le recouvrement anti-perforation (4).

11. Semelle intérieure (6) de chaussure selon la revendication 10, **caractérisée en ce que** la semelle intérieure (6) de chaussure est fabriquée par un procédé selon l'une des revendications 1, 2 ainsi que 4 à 9 pour ce qui concerne leur renvoi aux revendications 1 ou 2.

12. Semelle intérieure (6) de chaussure, **caractérisée en ce que** la semelle intérieure (6) de chaussure présente un assemblage constitué des couches suivantes :
- un premier textile (1) qui constitue un matériau supérieur de la semelle intérieure de chaussure et doté d'un côté supérieur et d'un côté inférieur,
- un gel TPR (5) qui est relié en surface au côté inférieur du premier textile (1) et au premier côté du deuxième textile (2),
- un recouvrement anti-perforation (4) relié à un deuxième côté du deuxième textile (2) et
- une couche de PU (7) injectée sur le recouvrement anti-perforation (4).

13. Semelle intérieure (6) de chaussure selon la revendication 12, **caractérisée en ce que** la semelle intérieure (6) de chaussure est fabriquée par un procédé selon l'une des revendications 3 et 4 à 9 pour ce qui concerne leur renvoi à la revendication 3.
